# EUROPÄISCHE PATENTSCHRIFT

(11) **EP 2 160 965 B1**
(45) Veröffentlichungstag und Bekanntmachung des Hinweises auf die Patenterteilung: **10.10.2012**
(21) Anmeldenummer: 09167498.6
(22) Anmeldetag: 07.08.2009
(51) Int. Cl.: A47J 31/46, F04C 2/107, F04C 15/00

(54) **Exzenterschneckenpumpe**
Eccentric screw pump
Pompe à vis sans fin excentrique

(30) Priorität: 27.08.2008 DE 102008039973
(43) Veröffentlichungstag der Anmeldung: 10.03.2010
(73) Patentinhaber: WMF Württembergische Metallwarenfabrik AG, 73309 Geislingen/Steige (DE)
(72) Erfinder: Dollner, Sander, 89079 Ulm-Wiblingen (DE); Startz, Armin, 89197 Weidenstetten (DE)
(74) Vertreter: BRP Renaud & Partner

(56) Entgegenhaltungen:
- EP-A- 0 781 520
- EP-A- 1 418 336
- DE-C- 686 631
- US-A- 2 161 374
- US-A- 5 305 923
- US-A- 5 735 436

## Beschreibung

Die vorliegende Erfindung betrifft eine Kaffeemaschine gemäß dem Oberbegriff des Anspruchs 1. Die Erfindung betrifft außerdem ein Gerät zur Dosierung bzw. zur Ausgabe von Flüssigkeiten und/oder Schaum mit einer Exzenterschneckenpumpe für Flüssigkeiten.

Aus der DE 10 2004 038 686 B3 ist eine gattungsgemäße Exzenterschneckenpumpe mit einem Stator und einem darin laufenden Rotor sowie einem Antriebsmotor zum Antrieb des Rotors bekannt. Der Läufer des Antriebsmotors ist dabei starr mit dem Rotor verbunden und läuft auf einer exzentrischen Kreisbahn innerhalb eines zylindrischen Topfes um. Ein Drehmoment zum Antrieb des Rotors wird dabei mittels einer Statorwicklung erzeugt.

Aus der DE 43 13 442 A1 ist eine nach dem Verdrängerprinzip arbeitende Fluidpumpe mit einem aus einem Elastomer bestehenden Stator bekannt, der mit einem in Längsrichtung durchgehenden Hohlraum versehen ist. Dieser Hohlraum ist im unverformten Zustand des Stators von zwei ebenen Seitenflächen und zwei halbzylindrischen Stirnflächen begrenzt. Im Stator ist ein mit einem Rundgewinde versehener Motor angeordnet, der sich relativ zum Stator verdrehen kann, wobei der Hohlraum des Stators und das Rundgewinde des Rotors derart aufeinander abgestimmt sind, dass der Stator nur in einer Ebene, nämlich in einer Ebene senkrecht zu den Seitenwänden des Hohlraums verformt werden kann. Bei der Umdrehung des Rotors im sich verformenden Stator, entstehen somit Kammern, die sich von der Saugseite der Pumpe zur Druckseite verlagern und damit das Fluid befördern.

Aus der EP 0 781 520 A1 ist eine Brühgetränkezubereitungsmaschine, insbesondere auch eine Kaffeemaschine, mit einem Wasservorratsbehälter und einer von einem Elektromotor elektrisch angetriebenen Pumpe bekannt, die Wasser aus dem Wasservorratsbehälter unter Druck setzt und einem von einer elektrischen Heizeinrichtung beheizten Durchlauferhitzer zuführt. In dem Durchlauferhitzer wird in einem Wasserrohr Wasser erhitzt und anschließend einer mit Kaffeemehl befüllbaren Druckkammer einer Brüheinrichtung zugeführt, aus der nach dem Extraktionsvorgang das fertige Kaffeegetränk in ein Gefäß abfließt. Im Strömungsmittelweg ist zwischen dem Durchlauferhitzer und der Brüheinrichtung eine bei Überschreiten eines vorgegebenen Drucks öffnende Ventileinrichtung vorgesehen, wodurch der von der Pumpe geförderte und durch den Durchlauferhitzer strömende Wasserstrom nahezu konstant bleiben soll, was wiederum eine gleichmäßige Wärmeabfuhr im Durchlauferhitzer hervorruft und einen Stillstand des Elektromotors vermeidet.

Aus der EP 1 418 336 A1 ist eine Exzenterschneckenpumpe mit einem integrierten Elektromotor bekannt, die einen in Rotor und Stator der Pumpe integrierten Antrieb aufweist. Hierbei enthält der Rotor Magnete bzw. weichmagnetische Teile. Im Stator sind Spulen zur Erzeugung veränderlicher Magnetfelder vorgesehen. Diese Magnetfelder bewirken im Eingriff mit Magneten bzw. weichmagnetischen Teilen im Rotor ein Drehmoment auf den Rotor.

Schließlich ist auch aus der US 5,735,436 A eine Exzenterschneckenpumpe bekannt.

Die vorliegende Erfindung beschäftigt sich mit dem Problem, für eine Exzenterschneckenpumpe der gattungsgemäßen Art, eine verbesserte Ausführungsform anzugeben, welche insbesondere einem sehr hohen Hygienestandart gerecht wird.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, bei einer an sich bekannten Exzenterschneckenpumpe, welche eine Exzenterschnecke, ein diese umgebendes elastisches Element sowie eine Antriebseinrichtung aufweist, eine berührungslose Kraftübertragung zwischen der Antriebseinrichtung und der Exzenterschnecke bzw. dem elastischen Element ausschließlich über magnetische Feldkräfte zu realisieren. Die Exzenterschneckenpumpe kann dabei so ausgebildet sein, dass die Antriebseinrichtung wahlweise die Exzenterschnecke oder das diese umgebende elastische Element berührungslos antreibt, wobei dann wahlweise die Exzenterschnecke oder das elastische Element einen magnetisierbaren bzw. magnetischen Teil aufweisen, durch welchen die magnetischen Feldkräfte von der Antriebseinrichtung übertragen werden können. Der magnetische bzw. magnetisierbare Teil der Exzenterschnecke bzw. des elastischen Elements, sind dabei vorzugsweise als magnetischer bzw. magnetisierbarer Kern ausgebildet und von einem Überzug überzogen, so dass der magnetisierbare Teil nicht in direktem Kontakt mit der zu fördernden Flüssigkeit steht. Mit der erfindungsgemäßen Exzenterschneckenpumpe wird eine Pumpe geschaffen, die äußerst leicht und dadurch hygienisch zu reinigen ist, da insbesondere Hinterschnitte, Achsdurchführungen, etc., in welchen sich bspw. Keime einnisten können, vermieden werden. Dabei ist die Exzenterschneckenpumpe vorzugsweise derart ausgelegt, dass alle Komponenten derselben nach dem Zerlegen eines Pumpenkopfes einzeln und einfach gereinigt werden können und das von einem einfachen Benutzer und nicht nur von einem geschulten und versierten Servicetechniker. Durch den einfachen Aufbau und die geringe Teileanzahl sowie eine geringe Montagekomplexität, ist die Exzenterschneckenpumpe auch für einen normalen Anwender zerleg- und reinigbar, wobei insbesondere das Ergebnis der Reinigung für den Anwender anschaulich nachvollziehbar ist, da - wie oben angeführt - die bisher in derartigen Exzenterschneckenpumpen vorhandenen Toträume nunmehr nicht mehr existent sind.

Bei einer vorteilhaften Weiterbildung der erfindungsgemäßen Lösung, ist die Antriebseinrichtung als Spule ausgebildet. Eine derartige Spule kann bspw. axial benachbart oder radial die Exzenterschnecke bzw. das elastische Element umgebend angeordnet werden, wodurch eine hohe konstruktive Freiheit bezüglich der Anordnung und Ausgestaltung der Antriebseinrichtung geschaffen werden kann. Im Unterschied zu einer elektrischen Antriebseinrichtung mit lediglich einer magnetischen Kraftübertragung zwischen einem Rotor der Antriebseinrichtung und der Exzenterschnecke bzw. dem elastischen Element, bedarf es bei der Spule selbst keiner rotierenden Elemente, wodurch diese nicht nur kostengünstig, sondern auch äußerst verschleißarm arbeitet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Exzenterschneckenpumpe in einer Explosionsdarstellung,
- Fig. 2: eine Schnittdarstellung durch eine erfindungsgemäße Exzenterschneckenpumpe.

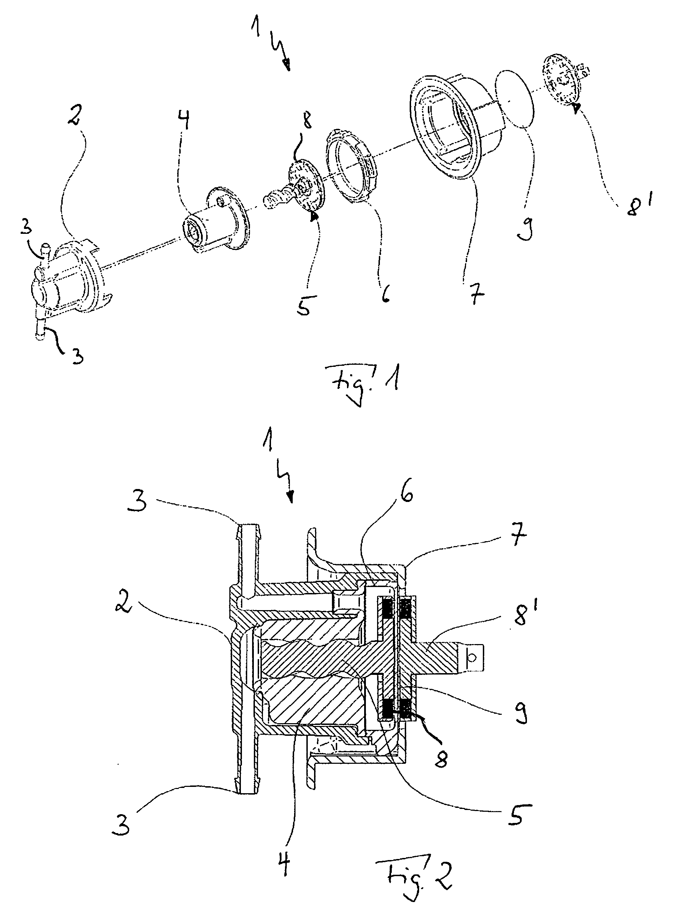

Entsprechend der Fig. 1, weist eine erfindungsgemäße Exzenterschneckenpumpe 1 ein Gehäuse 2 mit einem Zu-/Ablauf 3 auf. Zumindest teilweise innerhalb der Gehäuses 2 ist dabei ein als elastisches Element ausgebildeter Stator 4 sowie eine darin drehbar gelagerte Exzenterschnecke 5 angeordnet. Diese werden über einen Gehäusedeckel 6 im Gehäuse 2 gehalten. Die Komponenten 2, 4, 5 und 6 bilden dabei zusammen einen so genannten Pumpenkopf, welcher in einer gehäuseartigen Aufnahme 7 angeordnet ist. Die Exzenterschnecke 5 weist dabei gemäß den in den Fig. 1 und 2 dargestellten Ausführungsformen eine magnetisierbare bzw. magnetische Antriebsscheibe 8 auf, welche über eine Stirnplatte 9 mit einer ebenfalls magnetischen bzw. magnetisierbaren Antriebsscheibe 8' einer nicht gezeigten Antriebseinrichtung in Kraft übertragendem Kontakt steht. Dabei ist gemäß den gezeigten Ausführungsformen ausschließlich die Exzenterschnecke 5 von der Antriebseinrichtung berührungslos angetrieben, wobei auch denkbar ist, dass die Antriebseinrichtung mittels magnetischer Feldkräfte das elastische Element 4 antreibt, während die Exzenterschnecke 5 das eigentliche Statorelement bildet.

Erfindungsgemäß erfolgt eine Kraftübertragung zwischen der Antriebseinrichtung und der Exzenterschnecke 5 oder dem elastischen Element 4 ausschließlich über magnetische Feldkräfte, dass heißt insbesondere nicht durch eine Achse, welche bspw. die Aufnahme 7 durchbrechen und damit schwer zu reinigende Stellen schaffen würde. Insbesondere kann mit der erfindungsgemäßen Exzenterschneckenpumpe 1 sowie ihrem berührungslosen Antrieb eine Pumpe geschaffen werden, die keine Toträume bzw. schwierig zu reinigende Stellen aufweist, in welchen sich Keime einnisten können. Der dadurch besonders hygienische Betrieb kann zusätzlich gesteigert werden, indem ein für den Antrieb erforderlicher magnetischer/magnetisierbarer Teil der Exzenterschnecke 5 oder des elastischen Elements 4, gemäß den Fig. 1 und 2 also die Antriebsscheibe 8, nicht mit der zu fördernden Flüssigkeit in Kontakt steht und insbesondere mit einem Kunststoffüberzug vor einem direkten Kontakt mit der Flüssigkeit geschützt ist. Die magnetische bzw. magnetisierbare Antriebsscheibe 8 bildet somit lediglich einen magnetischen bzw. magnetisierbaren Kern, welcher von dem Kunststoffüberzug überzogen ist.

Zur Kraftübertragung zwischen der Antriebseinrichtung und der Exzenterschnecke 5 kann bspw. ein Elektromagnet oder ein Permanentmagnet vorgesehen sein, wobei auch denkbar ist, dass die Antriebseinrichtung überhaupt keine rotierenden Elemente, d.h. insbesondere keine rotierende magnetische bzw. magnetisierbare Antriebsscheibe 8' aufweist, sondern bspw. als Spule ausgebildet ist. Bei einer als Spule ausgebildeten Antriebseinrichtung ist ein besonders geräusch- und wartungsarmer Betrieb der Exzenterschneckenpumpe 1 möglich.

Wie bereits einführend erwähnt, kann die Antriebseinrichtung wahlweise auf die Exzenterschnecke 5 oder das diese umgebende elastische Element 4 einwirken, wobei im letzteren Fall das elastische Element 4 ebenfalls einen magnetischen bzw. magnetisierbaren Teil, insbesondere einen magnetischen bzw. magnetisierbaren Kern, aufweist.

Generell kann die erfindungsgemäße Exzenterschneckenpumpe 1 Bestandteil einer Kaffeemaschine oder eines Geräts zur Dosierung bzw. zur Ausgabe von Flüssigkeiten und/oder Schaum bei insbesondere zur Dosierung bzw. zur Ausgabe von Milchschaum, sein. Daneben ist auch denkbar, dass die Exzenterschneckenpumpe 1 Bestandteil eines Gerätes zur Dosierung bzw. zur Ausgabe von Soßen und/oder pastösen Speisen, wie bspw. Senf, Mayonnaise oder Ketchup ausgebildet ist.

Selbstverständlich sind auch nicht nur die gemäß den Fig. 1 und 2 gezeigten Ausführungsformen der Exzenterschneckenpumpe 1 vom Erfindungsgedanken umschlossen, sondern vielmehr auch andere Ausführungsformen, bei welchen ein berührungsloser Antrieb der Exzenterschnecke 5 oder des elastischen Elements 4 erfolgt, und bei welchen die Exzenterschneckenpumpe 1 aufgrund des berührungslosen Antriebs besonders einfach und leicht zu demontieren und damit zu reinigen ist. Insbesondere kann auch die Aufnahme 7 gänzlich ohne Hinterschnitte und Sacklöcher ausgebildet sein, so dass nach einer Demontage des aus den Teilen 2, 4, 5 und 6 gebildeten Pumpenkopfes nur einfach zu reinigende und weitgehend ebene Flächen übrig bleiben. Selbstverständlich kann die erfindungsgemäße Exzenterschneckenpumpe 1 auch über eine geeignete Einrichtung verfügen, welche es ermöglicht, die Magnetkräfte zwischen der Antriebsscheibe 8' und der Antriebsscheibe 8 bei der Montage zu überwinden, wobei dies im einfachsten Fall bspw. durch ein Gewinde mit großer Steigung am Gehäuse 2 zu realisieren ist. Durch den einfachen Aufbau und die gleichzeitige geringe Teileanzahl der erfindungsgemäßen Exzenterschneckenpumpe 1, lässt sich diese auch von herkömmlichen Anwendern problemlos reinigen, wobei durch die vereinfachte Montage das Reinigungsergebnis visuell auch kontrollierbar ist. Darüber hinaus lässt sich die erfindungsgemäße Exzenterschneckenpumpe 1 kostengünstig herstellen und ermöglicht es den Benutzer, den kompletten Medienpfad der zu fördernden Flüssigkeit einzusehen. Generell kann dabei das elastische Element 4 zusätzlich Abdichtfunktionen übernehmen, insbesondere zur Abdichtung des Gehäuses 2 gegenüber der Aufnahme 7. Sinnvoll ist hierbei insbesondere eine Abdichtfunktion des Gehäuses 2 zum Gehäusedeckel 6 hin.

## Patentansprüche

1. Kaffeemaschine,
**dadurch gekennzeichnet,**
- **dass** die Kaffeemaschine eine Exzenterschneckenpumpe (1), insbesondere für Flüssigkeiten, aufweist, die eine Exzenterschnecke (5) und ein diese umgebendes elastisches Element (4) sowie eine Antriebseinrichtung umfasst,
- **dass** ein Gehäuses (2), das elastische Element (Stator) (4), die Exzenterschnecke (5) und ein Gehäusedeckel (6) zusammen einen Pumpenkopf bilden, der in einer Aufnahme (7) angeordnet ist, wobei die Aufnahme (7) gänzlich ohne Hinterschnitte und Sacklöcher ausgebildet ist, so dass nach einer Demontage des Pumpenkopfes nur einfach zu reinigende und weitgehend ebene Flächen übrig bleiben.

2. Kaffeemaschine nach Anspruch 1,
**dadurch gekennzeichnet,**
- **dass** die Exzenterschnecke (5) oder das diese umgebende elastische Element (4) einen magnetischen/magnetisierbaren Teil (8) aufweisen, so dass eine Kraftübertragung zwischen der Antriebseinrichtung und der Exzenterschnecke (5) oder dem elastischen Element (4) ausschließlich über magnetische Feldkräfte erfolgt,
- **dass** ein für den Antrieb erforderlicher magnetischer/magnetisierbarer Teil (8) der Exzenterschnecke (5) oder des elastischen Elements (4) nicht mit der zu fördernden Flüssigkeit in Kontakt steht, insbesondere mit einem Kunststoffüberzug vor einem direkten Kontakt mit der Flüssigkeit geschützt ist.

3. Kaffeemaschine nach Anspruch 1 oder 2,
**dadurch gekennzeichnet,**
**dass** ein Elektromagnet und/oder ein Permanentmagnet vorgesehen sind/ist, der die für die Kraftübertragung erforderlichen magnetischen Feldkräfte erzeugt.

4. Kaffeemaschine nach Anspruch 2 oder 3,
**dadurch gekennzeichnet,**
**dass** die Antriebseinrichtung eine magnetische Antriebsscheibe (8') aufweist, welche axial benachbart zu einer magnetischen/magnetisierbaren Antriebsscheibe (8) des elastischen Elements (4) oder der Exzenterschnecke (5) angeordnet ist.

## Claims

1. A coffee machine,
**characterized in**
- **that** the coffee machine encompasses an eccentric screw pump (1), in particular for liquids, which comprises an eccentric screw (5) and an elastic element (4) surrounding the latter as well as a drive device,
- **that** a housing (2), the elastic element (stator) (4), the eccentric screw (5) and a housing cover (6) together form a pump head, which is arranged in an accommodation (7), wherein the accommodation (7) is embodied entirely without undercuts and blind holes, so that, after a disassembly of the pump head, only surfaces remain, which can be cleaned easily and which are flat for the most part.

2. The coffee machine according to claim 1,
**characterized in**
- **that** the eccentric screw (5) or the elastic element (4) surrounding it encompass a magnetic/magnetizable part (8), so that a power transmission between the drive device and the eccentric screw (5) or the elastic element (4) takes place only via magnetic field powers,
- **that** a magnetic/magnetizable part (8) of the eccentric screw (5) or of the elastic element (4), which is required for the drive, is not in contact with the liquid, which is to be conveyed, in particular that it is protected from a direct contact with the liquid by means of a plastic coating.

3. The coffee maker according to claim 1 or 2,
**characterized in**
**that** provision are/is made for an electromagnet and/or for a permanent magnet, which generates the magnetic field powers required for the power transmission.

4. The coffee machine according to claim 2 or 3,
**characterized in**
**that** the drive device encompasses a magnetic drive disk (8'), which is arranged axially adjacent to a magnetic/magnetizable drive disk (8) of the elastic element (4) or of the eccentric screw (5).

## Revendications

1. Machine à café, **caractérisée en ce que**
- la machine à café comporte une pompe à vis sans fin excentrique (1), notamment pour des liquides, qui comprend une vis sans fin excentrique (5) et un élément élastique (4) entourant cette dernière, ainsi qu'un système d'entraînement,
- un boîtier (2), l'élément élastique (stator) (4), la vis sans fin excentrique (5) et un couvercle de boîtier (6) forment ensemble une tête de pompe, qui est disposée dans un logement (7), le logement (7) étant réalisé en totalité sans contre-dépouilles, ni trous borgnes, de sorte qu'après un démontage de la tête de pompe, il ne reste que des surfaces faciles à nettoyer et amplement planes.

2. Machine à café selon la revendication 1, **caractérisée en ce que**
- la vis sans fin excentrique (5) ou l'élément élastique (4) entourant cette dernière comportent une pièce magnétique/magnétisable (8), de telle sorte qu'une transmission de force entre le système d'entraînement et la vis sans fin excentrique (5) ou l'élément élastique (4) s'effectue exclusivement par l'intermédiaire de forces de champs magnétiques
- une pièce magnétique/magnétisable (8) de la vis sans fin excentrique (5) ou de l'élément élastique (4) qui est nécessaire pour l'entraînement n'est pas en contact avec le liquide à transporter, notamment est protégée contre un contact direct avec le liquide par un revêtement en matière plastique.

3. Machine à café selon la revendication 1 ou 2, **caractérisée en ce qu'**un électroaimant et/ou un aimant permanent est/sont prévu(s) qui génère(nt) les forces de champs magnétiques nécessaires pour la transmission de force.

4. Machine à café selon la revendication 2 ou 3, **caractérisée en ce que** le système d'entraînement comporte un disque d'entraînement magnétique (8'), qui en direction axiale est voisine d'un disque d'entraînement magnétique/magnétisable (8) de l'élément élastique (4) ou de la vis sans fin excentrique (5).
